# EUROPÄISCHE PATENTSCHRIFT

(11) **EP 2 674 223 B1**
(45) Veröffentlichungstag und Bekanntmachung des Hinweises auf die Patenterteilung: **15.01.2020**
(21) Anmeldenummer: 13163251.5
(22) Anmeldetag: 11.04.2013
(51) Int. Cl.: H05H 1/42, C23C 4/067, C23C 4/134, B05B 7/22, C23C 4/02, C23C 4/01, B05B 7/24, B05B 7/26

(54) **Vorrichtung zum Kennzeichnen eines Substrats**
Device for marking a substrate
Dispositif de caractérisation d'un substrat

(30) Priorität: 20.04.2012 DE 102012103498
(43) Veröffentlichungstag der Anmeldung: 18.12.2013
(73) Patentinhaber: Maschinenfabrik Reinhausen GmbH, 93059 Regensburg (DE)
(72) Erfinder: Nettesheim, Stefan, 93051 Regensburg (DE)
(74) Vertreter: Reichert & Lindner Partnerschaft Patentanwälte

(56) Entgegenhaltungen:
- DE-A1-102007 016 243
- DE-A1-102009 015 510
- DE-A1-102009 037 846
- DE-B3-102008 053 640
- US-A- 3 912 235
- US-A- 5 679 167

## Beschreibung

Die Erfindung betrifft eine Vorrichtung zum Kennzeichnen eines Substrats. Hierzu ist ein Plasmaerzeuger für einen Plasmajet vorgesehen, der auf das Substrat gerichtet ist, auf welchem die Kennzeichnung aufgebracht werden soll.

Vorrichtungen und Systeme, mit denen es möglich ist, Güter eindeutig und fälschungssicher zu kennzeichnen werden zunehmend wichtig. Das Thema der Produktpiraterie reicht bis in die Bereiche der Fahrzeugtechnik, Luftfahrt und Medizinprodukte und führt zu hohen Risiken bei den Herstellern von Qualitätsprodukten mit hohem Sicherheitsstandard. Materialien und Verfahrensweisen zur eindeutigen Kennzeichnung sind am Markt eingeführt. Die Verfahrensweisen beruhen zum Teil auf Mikrostrukturierung, Farbkennzeichnung, Einbringen von chemischen oder isotopischen Markersubstanzen.

Die internationale Patentanmeldung WO 20 10 066 237 A1 offenbart ein Verfahren zur Authentifizierung und/oder Identifizierung eines Gegenstandes, der ein chemisches Markierungsmittel enthält, das in einem Marker als Träger im Wesentlichen untrennbar eingeschlossen ist und ausgewählte chemische Elemente und/oder Verbindungen in Form von Markierungselementen umfasst. Die Konzentrationen der Markierungselemente in der Matrix enthalten einen festgelegten Verschlüsselungscode. Mit dem Verfahren wird zunächst ein qualitatives und/oder quantitatives Bestimmen der Markierungselemente des chemischen Markierungsmittels durchgeführt. Die gewonnenen Werte werden mit bestimmten Werten im festgelegten Verschlüsselungscode abgeglichen.

Das U.S.-Patent 5,867,586 offenbart ein Authentifizierungssystem, das eine ultraviolette Lichtquelle in Verbindung mit einer Vorrichtung zur Aufnahme und Erkennung von graphischen Bildern oder Buchstaben oder beidem umfasst. Anhand der erkannten Bilder, Buchstaben oder Kombinationen aus Bildern und Buchstaben kann festgelegt werden, ob es sich bei dem vorliegenden Gegenstand um ein Original, oder um eine Fälschung handelt.

Das U.S.-Patent 3,663,813 umfasst Symbole, welche auf einem Substrat mittels einer codierten Tinte aufgebracht worden sind. Die Symbole werden mit ultraviolettem Licht beleuchtet und die Photolumineszenz von den verschiedenen Symbolen wird über ein dispersives Element auf eine Kamera übertragen. Mit der im U.S.-Patent beschriebenen Vorrichtung ist es somit möglich, die codierten Symbole auf dem Substrat auszulesen.

Die deutsche Patentanmeldung DE 10 2007 016 243 A1 offenbart ein Verfahren zur Beschichtung eines Werkstücks, wobei ein Beschichtungswerkstoff und ein Zuschlagwerkstoff durch thermisches Spritzen auf das Werkstück aufgetragen werden. Zusätzlich zu dem Beschichtungswerkstoff wird ein Zuschlagwerkstoff auf das Werkstück aufgetragen, in dem bzw. auf dem ein fluoreszierender Markerwerkstoff fest gebunden ist. Der Spritzvorgang wird dadurch online überwacht, dass zumindest die in einem Spritzstrahl befindlichen Partikel des fluoreszierenden Markerwerkstoffs erfasst und ausgewertet werden.

Die deutsche Offenlegungsschrift DE 10 2009 037 846 A1 betrifft Beschichtungsverfahren, in denen Partikel in eine austretende Plasmaflamme eingebracht werden, sowie damit erzeugte Beschichtungen und ihre Verwendung. Die Beschichtungen können unter anderem zu Markierungszwecken verwendet werden.

Nachteile des Standes der Technik liegen darin, dass die Markersubstanzen nicht dauerhaft auf die Oberflächen der zu kennzeichnenden Güter aufgebracht werden können. Ferner ist es erforderlich, dass die Markersubstanzen und die aufgebrachten Schichten eine lange Lebensdauer aufweisen sollen und ebenfalls unter Umweltbedingungen, wie z. B. Temperaturbelastung, nicht degenerieren.

Der Erfindung liegt die Aufgabe zugrunde, eine Vorrichtung zum Kennzeichnen eines Substrats zu schaffen, mit der es möglich ist mittels Hilfe eines thermischen Spritzverfahrens eine dauerhafte, zuverlässige, und feste Codierung eines Gutes zu ermöglichen. Dabei sollen sich die Eigenschaften der Kennzeichnung beim thermischen Spritzverfahren nicht ändern.

Die obige Aufgabe wird durch eine Vorrichtung zum Kennzeichnen eines Substrats gelöst, die die Merkmale des Anspruchs 1 umfasst.

Die Vorrichtung zum Kennzeichnen eines Substrats besteht aus einem Plasmaerzeuger, der einen Plasmajet auf das Substrat richtet. Es sind mindestens ein erster Behälter mit Pulver und mindestens ein zweiter Behälter mit einer pulverförmigen Markersubstanz vorgesehen. Es ist ebenso denkbar, dass mindestens ein erster Behälter vorgesehen ist, der Pulver und die pulverförmige Markersubstanz enthält. Ferner ist ein Pulverinjektor zur Erzeugung eines Pulverjets dem Plasmaerzeuger zugeordnet. Der Plasmajet und der Pulverjet sind dabei überlagert, so dass sich auf der Oberfläche des Substrats eine Schicht ausbildet, die letztendlich die Kennzeichnung für das Substrat bildet. Die Schicht besteht aus dem Pulver aus dem ersten Behälter und aus der pulverförmigen Markersubstanz, die z.B. aus dem mindestens zweiten Behälter entnommen wird.

Das Pulvergemisch wird einem Pulverinjektor zur Erzeugung eines Pulverjets zugeführt. Der Pulverinjektor ist dabei derart in Bezug auf den Plasmaerzeuger angeordnet, dass der Plasmajet und der Pulverjet überlagert sind. Auf dem Substrat bildet sich somit eine Schicht aus, die aus dem geschmolzenen Pulver und der darin eingebetteten pulverförmigen Markersubstanz besteht.

Unabhängig von der Ausführungsform der Vorrichtung, kann der zumindest erste Behälter und der zumindest zweite Behälter oder der einzige Behälter mit dem Pulvergemisch mit einer Pulverdosier- und Dispergiereinheit verbunden sein. Das in der Pulverdosier- und Dispergiereinheit erzeugte Pulvergemisch wird über eine Leitung in Verbindung mit einem Zuführgas dem Pulverinjektor zugeführt. Die Pulverdosier- und Dispergiereinheit dient zu einer weiteren Homogenisierung des Pulvergemisches, falls erforderlich.

Der Pulverinjektor ist dabei derart in Bezug auf den Plasmaerzeuger angeordnet, dass eine räumliche Ausdehnung eines Plasmajets des Plasmaerzeugers größer ist, als eine räumliche Ausdehnung des Pulverjets des Pulverinjektors auf dem Substrat. Durch diese spezielle räumliche Anordnung des Plasmajets und des Pulverjets kann man sicherstellen, dass sämtliche der im Pulvergemisch vorhandenen pulverförmigen Markersubstanzen in eine Matrix aus dem Pulver aus dem ersten Behälter eingebettet sind. Die Markersubstanz soll dabei derart ausgestaltet sein, dass sie ihre Struktur (Gitterstruktur) während des Prozesses des Aufbringens auf das Substrat nicht ändert. In der Regel wird ein thermisches Spritzverfahren für das Aufbringen der Schicht auf das Substrat verwendet. Die Markersubstanz ist im Besonderen ein anorganisches Pulvergemisch mit einer charakteristischen Gitterkonstanten, so dass eine eindeutige Strukturinformation gegeben ist. Die pulverartige Markersubstanz und das Pulver, welches letztendlich die Matrix der Schicht bildet, werden mit dem Plasmaspritzverfahren aufgetragen. Dabei ist die Temperatur des Plasmaspritzverfahrens so gestaltet, dass die Strukturinformation der Markersubstanz vollständig erhalten bleibt. Hinzu kommt, dass mit dem Plasmaverfahren eine stabile und hohe Haftfestigkeit der Schicht auf dem Substrat gegeben ist. Die Partikel der Markersubstanz sind im Wesentlichen homogen innerhalb einer polymeren oder metallischen oder glasartigen Matrix des Pulvers aus dem ersten Behälter verteilt. Das Pulver aus dem ersten Behälter schmilzt während des Plasmaspritzverfahrens und bildet somit die Matrix für die Teilchen der Markersubstanz. Der Plasmaerzeuger stellt eine gepulste Bodenentladung bereit.

Bei einem Verfahren zur Kennzeichnung eines Substrats wird zunächst aus mindestens einem ersten Behälter ein Pulver und eine pulverförmige Markersubstanz entnommen. Mit einem Pulverinjektor wird die homogene Verteilung aus Pulver und pulverförmiger Markersubstanz in einen Plasmajet eines Plasmaerzeugers eingebracht. Der Plasmajet und ein Pulverjet aus einem Pulverinjektor werden überlagert.

Gemäß einem anderen Beispiel eines solchen Verfahrens wird zumindest aus einem ersten Behälter ein Pulver entnommen. Parallel dazu wird aus zumindest einem zweiten Behälter eine pulverförmige Markersubstanz entnommen.

Das Pulver und die pulverförmige Markersubstanz werden einer Pulverdosier- und Dispergiereinheit zugeführt. Dabei kann das Pulvergemisch einem einzigen Behälter entnommen werden oder aus einem Behälter mit Pulver und einem Behälter mit pulverförmiger Markersubstanz stammen. In der Pulverdosier- und Dispiergiereinheit werden das Pulver und die pulverförmige Markersubstanz zu einer homogenen Mischung gemischt. Die homogene Mischung aus dem Pulver und der pulverförmigen Markersubstanz wird einem Pulverinjektor zur Verfügung gestellt. Der Pulverinjektor bildet einen Pulverjet aus, der mit einem Plasmajet des Plasmaerzeugers überlagert wird. Das Pulver und die pulverförmige Markersubstanz werden somit in einem einzigen Schritt mittels eines thermischen Spritzverfahrens auf das Substrat aufgetragen.

Dem aus der Pulverdosier- und Dispergiereinheit austretenden Pulvergemisch wird ein Zuführungsgas zugesetzt, um somit eine Fließfähigkeit des Pulvergemisches zu gewährleisten.

Der aus dem Plasmaerzeuger austretende Plasmajet wird mittels Bogenentladung erzeugt. Der aus Pulver und pulverförmiger Markersubstanz bestehende Pulverjet wird mit dem Plasmajet überlagert. Somit wird auf dem Substrat eine haftende Schicht abgeschieden, bei der das Pulver eine Matrix bildet, in der die pulverförmige Markersubstanz homogen verteilt und eingebettet ist. Während des thermischen Spritzverfahrens ist eine Temperatur des Plasmajets derart gewählt, dass sich strukturelle Eigenschaften der pulverförmigen Markersubstanz nicht ändern. Nach dem Aufbringen der Kennzeichnung auf das Substrat hat die pulverförmige Markersubstanz in der Matrix unveränderte Struktureigenschaften, die denjenigen der pulverförmigen Markersubstanz in Pulverform entsprechen.

Die Kennzeichnung für ein Substrat besteht aus einer auf dem Substrat haftenden Schicht, die aus in einem thermischen Spritzverfahren aufgebrachtem Pulvergemisch besteht. Das Pulver bildet eine Matrix, in der eine pulverförmige Markersubstanz homogen verteilt und dauerhaft eingebettet ist. Die pulverförmige Markersubstanz besitzt in der Matrix unveränderte Struktureigenschaften, die denen der pulverförmigen Markersubstanz in Pulverform entsprechen. Gemäß einem möglichen Beispiel kann die pulverförmige Markersubstanz mit einer Einbettung umhüllt sein. Das Material der Einbettung entspricht dem des Pulvers.

Nachfolgend wird die Erfindung anhand der Figuren näher erläutert. Es zeigen:
- **Figur 1**: eine schematische Ansicht einer ersten Ausführungsform der Vorrichtung zum Aufbringen einer Kennzeichnung auf ein Substrat;
- **Figur 2**: eine schematische Ansicht einer weiteren Ausführungsform der Vorrichtung zum Aufbringen einer Kennzeichnung auf ein Substrat;
- **Figur 3**: eine schematische Darstellung eines Pulvergemisches aus dem Pulver und der pulverförmigen Markersubstanz;
- **Figur 4**: eine schematische Darstellung eines Pulvergemisches aus dem Pulver und der im Pulver eingebetteten pulverförmigen Markersubstanz;
- **Figur 5a**: eine schematische Darstellung einer Schicht mit einer eingebetteten Markersubstanz auf dem Substrat;
- **Figur 5b**: eine Schicht mit eingebetteter Markersubstanz, welche in einer Vertiefung des Substrats eingebettet ist; und
- **Figur 6**: eine schematische Anordnung für eine mögliche Nachweismethode der Kennzeichnung des Substrats.

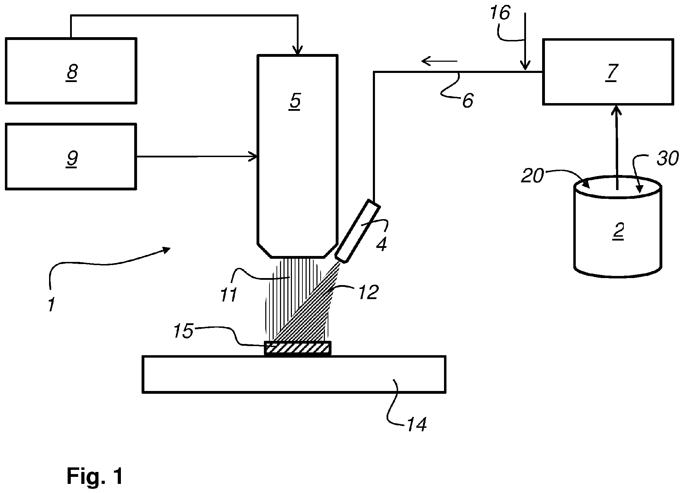

**Figur 1** zeigt eine schematische Ansicht der Vorrichtung 1 zum Beschichten eines Substrats 14. Das Aufbringen einer Schicht 15 erfolgt mit einem thermischen Spritzverfahren oder einem Plasmabeschichtungsverfahrens, ebenso wäre eine Laserauftragsbeschichtung möglich, so dass in der Schicht 15 eine Markersubstanz eingebettet ist, ohne dass dabei die in der Markersubstanz gespeicherte Information verloren geht.

Bei dem in Figur 1 beschriebenen Verfahren wird ein Plasmabeschichtungsverfahren für das Aufbringen der Schicht 15 verwendet. Mittels eines Plasmaerzeugers 5 wird ein Plasmajet 11 erzeugt, der auf das Substrat 14 gerichtet ist. Der Plasmaerzeuger 5 ist mit einer Stromversorgung 9 und mit einer Gaszuführung 8 verbunden. Die Gaszuführung 8 ist notwendig, um ein Plasma im Plasmaerzeuger 5 zu bilden. Dem Plasmaerzeuger 5 ist ferner ein Pulverinjektor 4 zugeordnet. Dem Pulverinjektor 4 wird ein Pulvergemisch 6 zugeführt, das mittels eines aus dem Pulverinjektor 4 austretenden Pulverjets 12 mit dem Plasmajet 11 überlagert wird.

Das Pulvergemisch 6 ist bereits in zumindest einem ersten Behälter 2 aus Pulver 20 und einer pulverförmigen Markersubstanz 30 gemischt und kann in einer nachgeschalteten Pulverdosier- und Dispergiereinheit 7 weiter homogenisiert werden, in der eine homogene Mischung aus dem Pulver 20 und der pulverförmigen Markersubstanz 30 gebildet wird. Dem Pulvergemisch 6 wird letztendlich noch ein Zuführgas 16 zugesetzt, um die Fließfähigkeit des Pulvergemisches 6 zu erzielen bzw. zu verbessern.

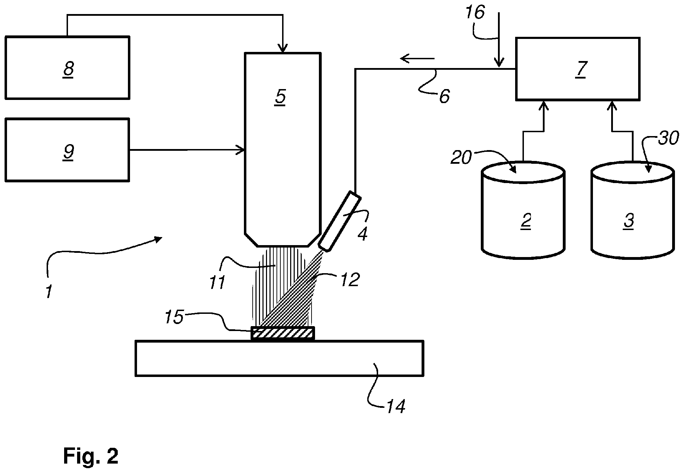

**Figur 2** zeigt eine schematische Ansicht einer weiteren Ausführungsform der Vorrichtung zum Aufbringen einer Kennzeichnung auf ein Substrat 14. Der Aufbau der Vorrichtung 1 ist im Wesentlichen identisch mit der Vorrichtung 1 aus Figur 1. Das Pulvergemisch 6 wird aus zumindest einem ersten Behälter 2 mit Pulver 20 und einem zweiten Behälter 3 mit einer pulverförmigen Markersubstanz 30 gebildet. Das Pulver 20 und die pulverförmige Markersubstanz 30 werden einer Pulverdosier- und Dispergiereinheit 7 zugeführt, in der eine homogene Mischung aus dem Pulver 20 und der pulverförmigen Markersubstanz 30 gebildet wird. Dem Pulvergemisch wird letztendlich noch ein Zuführgas 16 zugesetzt, um die Fließfähigkeit des Pulvergemisches zu erzielen.

Wie in Figur 1 und Figur 2 gezeigt, erreicht man mittels der Überlagerung des Plasmajets 11 und des Pulverjets 12 eine Aufschmelzung des Pulvers 20 aus dem ersten Behälter 2 und eine Einbettung der pulverförmigen Markersubstanzen 30 in der durch die Aufschmelzung des Pulvers 20 entstandenen Matrix 25. Die Matrix 25 kann aus Metallen, Polymeren oder Gläsern, etc. bestehen. Die durch das Plasmabeschichtungsverfahren aufgebrachte Schicht 15 haftet somit dauerhaft auf dem Substrat 14.

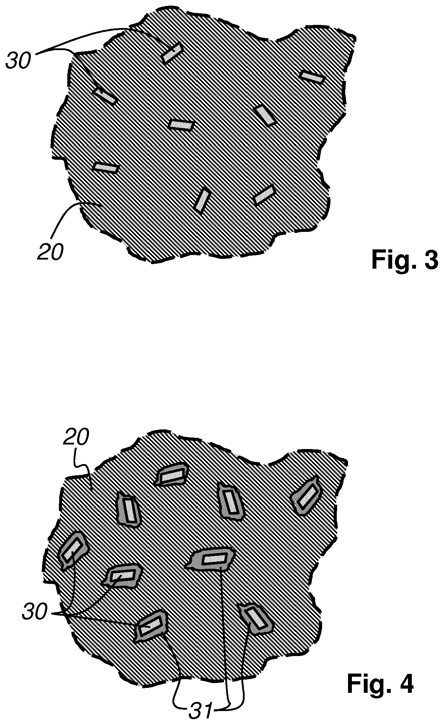

**Figur 3** zeigt eine schematische Ansicht der Verteilung der Partikel der Markersubstanz 30 innerhalb des Pulvers 20, wobei das Pulver 20 und die Markersubstanz 30 bereits in einem Behälter 20 gemäß einem vordefiniertem Verhältnis gemischt sind.

**Figur 4** zeigt eine andere Möglichkeit der Mischung der Partikel der Markersubstanz 30 und des Pulvers 20. Die Partikel der Markersubstanz 30 sind mit einer Einbettung 31 umhüllt. Die Einbettung 31 entspricht dem Material des geschmolzenen Pulvers 20 aus dem letztendlich die Matrix 25 resultiert. Bei dieser vorgeschlagenen Ausführungsform erzielt man beim Plasmabeschichtungsverfahren eine sichere Anbindung der Markersubstanz 30 an die Matrix 25. Die Partikel der Markersubstanz 30 mit der Einbettung 31 und das Pulver 20 sind ebenfalls in einem Behälter 20 gemäß einem vordefiniertem Verhältnis gemischt. Es ist selbstverständlich, dass die Partikel der Markersubstanz 30 mit der Einbettung 31 und das Pulver 20 in getrennten Behältern zu Verfügung gestellt werden.

Es ist vorteilhaft, wenn die vorgemischte Pulvermischung aus Pulver 20 und der Markersubstanz 30 für eine weitere Homogenisierung der Pulverdosier- und Dispergiereinheit 7 zugeführt wird. Selbstverständlich kann die Pulvermischung direkt vom Behälter 20 dem Pulverinjektor 4 zugeführt werden.

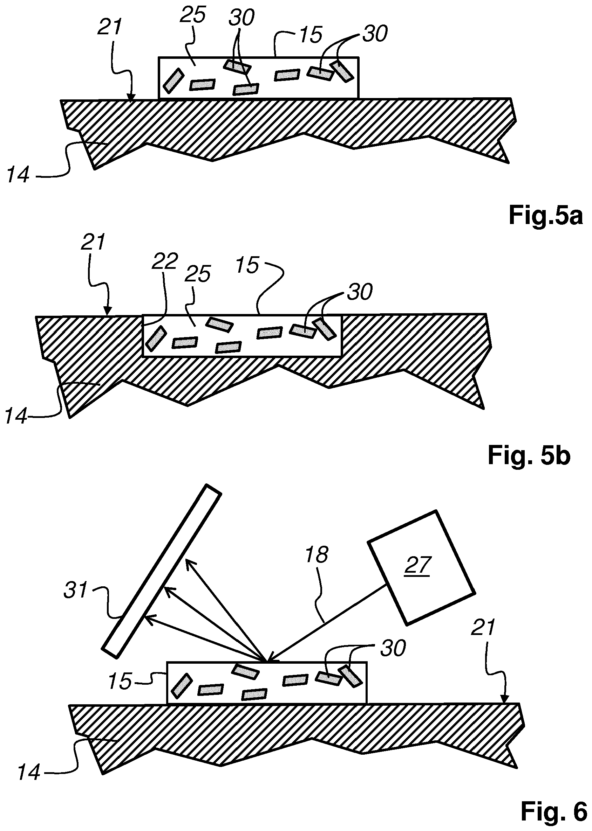

**Figur 5a** zeigt eine schematische Ansicht der Schicht 15, welche auf der Oberfläche 21 des Substrats 14 aufgebracht ist. Das Pulver 20 aus dem Pulvergemisch stellt die Matrix 25 zur Verfügung, in der die Partikel der pulverförmigen Markersubstanz 30 eingebettet sind. Die Verteilung der pulverförmigen Markersubstanz 30 innerhalb der Matrix 25 ist homogen.

**Figur 5b** stellt ein weiteres Beispiel des mit der Schicht 15 versehenen Substrats 14 dar. Das Substrat 14 hat eine Vertiefung 22 ausgeformt, in der mittels eines Plasmapulverbeschichtungsverfahrens die Schicht 15 aufgebracht wird. Hier sind die Partikel der pulverförmigen Markersubstanz 30 homogen innerhalb der Matrix 25 des Pulvers 20 verteilt.

**Figur 6** zeigt eine schematische Ansicht der Anordnung, mittels der überprüft wird, ob die auf dem Substrat 14 aufgebrachte Schicht 15 die entsprechend geformten charakteristischen Kennzeichnungsmerkmale umfasst. Die charakteristischen Gitterkonstanten der Markersubstanz 30 können z. B. mittels einer Streu- und/oder Beugungsanordnung leicht ausgelesen werden. Eine Röntgenstrahlquelle 27 richtet einen Röntgenstrahl 18 auf die Schicht 15. Die von der Markersubstanz 30 gebeugten Röntgenstrahlen werden einem Detektor 31 zugeführt. Anhand der Signale, welche der Detektor 31 registriert, kann leicht bestimmt werden, ob es sich um die Markersubstanz 30 handelt, welche in die Matrix 25 der Schicht 15 eingebettet worden ist und welche für die Kennzeichnung verantwortlich ist.

Mit dem Plasmaspritzverfahren wird das Pulvergemisch auf die Oberfläche 21 des Substrats 14 aufgetragen. Dabei ist die Temperatur des Plasmabeschichtungsverfahrens derart gewählt, dass das Pulver 20, welches Bestandteil des Pulvergemisches ist, zwar schmilzt und dennoch die charakteristischen und strukturellen Merkmale der Markersubstanz 30 erhalten bleiben. Die Strukturinformation der Markersubstanz 30 bleibt dabei vollständig erhalten und die Schicht haftet stabil und mit hoher Haftfestigkeit auf dem Substrat 14. Auch bei sehr dünnen Schichten 15 ist die Strukturinformation gegeben und damit die eindeutige und fälschungssichere Kennzeichnung des Produkts möglich.

Ein mögliches Beispiel für die fälschungssichere Kennzeichnung ist, dass die Markersubstanz 30 mit einem Lotmittel (Pulver 20), wie z. B. Zinn, gemischt wird. Die Markersubstanz 30 und das Zinn liegen beide in pulverförmiger Form vor und werden in der Pulverdosier- und Dispiergiereinheit 7 der erfindungsgemäßen Vorrichtung 1 gemischt. Mittels des Spritzverfahrens werden dann die entsprechenden Leiterbahnen aufgebracht, in die die Markersubstanz eingebettet ist. Bei den Leiterbahnen kann es sich z. B. um Leiterbahnen von Photovoltaikzellen oder 3-dimensionalen Strukturen zur Kontaktierung von Bauteilen handeln.

Eine weitere Einsatzmöglichkeit der Markersubstanz 30 ergibt sich bei metallischen Schichten auf Polymerstrukturen. Hier besteht das Pulvergemisch ebenfalls aus der Markersubstanz 30 und einem Bestandteil aus metallischen Pulver 20, der letztendlich die Matrix 25 für die Kennzeichnung bildet. Die metallischen Schichten auf Polymerstrukturen dienen z. B. für die EMV-Abschirmung oder für leitfähige Bahnen in Gehäusen von elektronischen Geräten. Während des Plasmaspritzverfahrens schmelzen die metallischen Pulverbestandteile und die Markersubstanz 30 wird in die Matrix 25 aus den metallischen Bestandteilen eingebettet.

Wie bereits eingangs erwähnt besteht das Pulvergemisch aus Bestandteilen, die eine eindeutige und nicht fälschbare Identifikation zulassen. Besonders geeignet sind hierfür anorganische Bestandteile mit spezifischen Gitterkonstanten, die eine eindeutige Analyse, wie z. B. durch Röntgenbeugung, zulassen. Durch eine Kombination von mehreren dieser nicht der Allgemeinheit bekannten Stoffe (Markersubstanzen) kann ein Code definiert werden, der einerseits fälschungssicher und andererseits sehr schnell und eindeutig lesbar ist. Der Leseprozess ist schnell und einfach durchführbar, der Schreibprozess ist fälschungssicher. Werden besonders temperaturstabile und chemisch innere Verbindungen gewählt, kann die Kennzeichnung mit sehr geringen Mengen der Markersubstanz 30 durch ein Plasmaauftragsverfahren und einer folgenden Einbettung in eine Matrix 25 aus Metallen, Polymeren oder Gläsern erfolgen. Für die Beschichtung ist hierfür besonders ein Plasmapulverbeschichtungsverfahren geeignet, bei dem die Temperaturen so begrenzt werden können, dass die Strukturinformation erhalten bleibt, jedoch eine sehr stabile und gut haftende Schicht 15 auf dem Substrat 14 abgeschieden wird.

## Patentansprüche

1. Vorrichtung (1) zum Kennzeichnen eines Substrats (14) mit einem Plasmaerzeuger (5) für einen Plasmajet (11), der auf das Substrat (14) gerichtet ist;
**dadurch gekennzeichnet, dass**
• mindestens ein erster Behälter (2) vorgesehen ist, der Pulver (20) und eine pulverförmige Markersubstanz(30) enthält, oder dass der mindestens eine erste Behälter (2) mit Pulver (20) und mindestens ein zweiter Behälter (3) mit einer pulverförmigen Markersubstanz (30) vorgesehen sind, wobei die Markersubstanz charakteristische Gitterkonstanten aufweist; dass
• ein Pulverinjektor (4) zur Erzeugung eines Pulverjets (12) aus dem Pulver (20) und aus der pulverförmigen Markersubstanz (30) dem Plasmaerzeuger (5) derart zugeordnet ist, dass der Plasmajet (11) und der Pulverjet (12) außerhalb des Plasmaerzeugers (5) überlagert sind, so dass auf dem Substrat (14) eine Schicht (15) ausbildbar ist, wobei der Pulverinjektor (4) derart in Bezug auf den Plasmaerzeuger (5) angeordnet ist, dass eine räumliche Ausdehnung des Plasmajets (11) des Plasmaerzeugers (5) auf dem Substrat (14) größer ist als eine räumliche Ausdehnung des Pulverjets (12) des Pulverinjektors (4) auf dem Substrat (14), und dass
• der Plasmaerzeuger (5) derart ausgebildet ist, dass er eine gepulste Bogenentladung bereitstellt.

2. Vorrichtung nach Anspruch 1, wobei der zumindest eine erste Behälter (2) oder der zumindest eine erste Behälter (2) und zumindest eine zweite Behälter (3) mit einer Pulverdosier- und Dispergiereinheit (7) verbunden sind und wobei das in der Pulverdosier- und Dispergiereinheit (7) homogenisierte Pulvergemisch über eine Leitung (6) in Verbindung mit einem Zuführgas (16) dem Pulverinjektor (4) zuführbar ist.

## Claims

1. A device (1) for marking a substrate (14), having a plasma generator (5) for a plasma jet (11), which is directed to the substrate (14),
**characterized by**
at least one first container (2) containing powder (20) and a powdery marker substance (30), or the at least one first container (2) with powder (20) and at least one second container (3) with a powdery marker substance (30), wherein the marker substance has characteristic lattice constants;
a powder injector (4) for generating a powder jet (12) from the powder (20) and from the powdery marker substance (30) being associated with the plasma generator (5) in such a way that the plasma jet (11) and the powder jet (12) are superimposed with each other outside the plasma generator (5) such that a layer (15) can be formed on the substrate (14), wherein the powder injector (4) is arranged with respect to the plasma generator (5) in such a way that a spatial expansion of the plasma jet (11) of the plasma generator (5) on the substrate (14) is larger than a spatial expansion of the powder jet (12) of the powder injector (4) on the substrate (14); and
the plasma generator (5) being configured in such a way that it delivers a pulsed arc discharge.

2. The device according to claim 1, wherein the at least one first container (2) or the at least one first container (2) and the at least one second container (3) are connected to a powder dosage and dispersion unit (7), and wherein the powder mixture homogenized in the powder dosage and dispersion unit (7) can be supplied via a conduit (6) in combination with a feed gas (16) to the powder injector (4).

## Revendications

1. Dispositif (1) de caractérisation d'un substrat (14) comprenant un générateur de plasma (5) pour un jet de plasma (11) qui est dirigé sur le substrat (14),
**caractérisé par le fait que**
au moins un premier récipient (2) contenant de la poudre (20) et une substance de marquage pulvérulente (30) est prévu, ou en ce qu'il est prévu l'au moins un premier récipient (2) contenant de la poudre (20) et au moins un deuxième récipient (3) contenant une substance de marquage pulvérulente (30), la substance de marquage présentant des constantes caractéristiques en réseau;
un injecteur de poudre (4) pour produire un jet de poudre (12) à partir de la poudre (20) et de la substance de marquage en forme de poudre (30) est associé au générateur de plasma (5) de telle sorte que le jet de plasma (11) et le jet de poudre (12) soient superposés en dehors du générateur de plasma (5), de sorte qu'une couche (15) puisse être formée sur le substrat (14), l'injecteur de poudre (4) étant agencé par rapport au générateur de plasma (5) de telle sorte qu'une expansion spatiale du jet de plasma (11) du générateur de plasma (5) sur le substrat (14) est supérieure à une expansion spatiale du jet de poudre (12) de l'injecteur de poudre (4) sur le substrat (14); et
le générateur de plasma (5) est configuré pour fournir une décharge d'arc pulsé.

2. Dispositif selon la revendication 1, dans lequel l'au moins un premier récipient (2) ou l'au moins un premier récipient (2) et l'au moins un deuxième récipient (3) sont reliés à une unité de dosage et de dispersion de poudre (7), et dans lequel le mélange de poudre homogénéisé dans l'unité de dosage et de dispersion de poudre (7) peut être amené à l'injecteur de poudre (4) via une conduite (6) en liaison avec un gaz de transport (16).
